# EUROPEAN PATENT APPLICATION

(11) **EP 4 524 795 A1**
(43) Date of publication of application: **19.03.2025**
(21) Application number: 23802843.5
(22) Date of filing: 08.05.2023
(51) Int. Cl.: G06F 21/60, G06F 16/955

(54) **DOCUMENT ACCESS METHOD AND APPARATUS, DEVICE, MEDIUM, AND PROGRAM PRODUCT**

(30) Priority: 11.05.2022 CN 202210517008
(71) Applicant: Beijing Zitiao Network Technology Co., Ltd., Beijing 100190 (CN)
(72) Inventor: XIE, Fengling, Beijing 100028 (CN); WANG, Weidong, Beijing 100028 (CN)
(74) Representative: Dentons UK and Middle East LLP
(86) International application number: PCT/CN2023/092711
(87) International publication number: WO 2023/217073

(57) **Abstract**

The present disclosure provides a document access method and apparatus, a device, a storage medium, and a program product. The method comprises: in response to a user having a first access permission of a first document, displaying document content of the first document; in response to receiving an access request for target information displayed in the document content of the first document, determining whether the user has a second access permission; and if the user does not have the second access permission, refusing to display associated content of the target information, the target information comprising at least one of the following: a link of a second document, a collaborator of the first document, and a user identifier displayed in the first document.

## Description

### CROSS-REFERENCE TO RELATED APPLICATIONS

This application claims the priority from Chinese patent application No. 202210517008.X filed with China Patent Office on May 11th, 2022, titled as "DOCUMENT ACCESS METHOD, APPARATUS, DEVICE, STORAGE MEDIUM AND PROGRAM PRODUCT", the entire content of which are hereby incorporated into the present application by reference.

### TECHNICAL FIELD

The present disclosure relates to the technical field of computers, in particular to a document access method, apparatus, device, storage medium, and program product.

### BACKGROUND ART

With gradual popularization of cloud documents and collaborative work, the security of cloud document sharing and collaborative work is becoming more and more important on the basis of meeting the needs of users for flexible sharing and multi-person collaboration. At present, all visitors can see user information and other information associated with a document, such that this kind of associated information is at the risk of leakage, and the security of document collaborative work is reduced.

### SUMMARY

The present disclosure provides a document access method, apparatus, device, storage medium, and program product, so as to solve, to a certain extent, the technical problem that content-associated information is at risk of leakage and the security of content collaborative work is reduced.

In a first aspect of the present disclosure, there is provided a document access method, the method comprising:
in response to a user having a first access permission of a first document, displaying document content of the first document;
in response to receiving an access request for target information displayed in the document content of the first document, determining whether the user has a second access permission; and if the user does not have the second access permission, refusing to display associated content of the target information; wherein the target information comprises at least one of the following: a link of a second document, a collaborator of the first document, and a user identifier displayed in the first document.

In a second aspect of the present disclosure, there is provided a document access apparatus, comprising:
a display module configured for displaying document content of a first document in response to a user having a first access permission to the first document;
a second access permission determining module configured for determining whether the user has a second access permission in response to receiving an access request for a target information displayed in the document content of the first document;
the display module is further configured to refuse to display associated content of the target information if the user does not have the second access permission; wherein the target information comprises at least one of the following: a link of a second document, a collaborator of the first document, and a user identifier displayed in the first document.

In a third aspect of the present disclosure, there is provided an electronic device, characterized by comprising one or more processors and a memory; and one or more programs, wherein the one or more programs are stored in the memory and executed by the one or more processors, and the programs comprising instructions for executing the method according to the first aspect or the second aspect.

In a fourth aspect of that present disclosure, there is provided a nonvolatile computer-readable storage medium containing a computer program, which, when executed by one or more processors, causes the processor(s) to implement the method according to the first aspect or the second aspect.

In a fifth aspect of that present disclosure, there is provided a computer program product comprising a computer program instruction which, when runs on a computer, causes the computer to implement the method according to the first aspect.

As can be seen from the above, the document access method, apparatus, device, medium and program product provided by the present disclosure can display target information to different degrees for users with different access permissions by setting the access permissions to the target information such as a link of a second document, a collaborator of a first document and a user identifier displayed in the first document, respectively. When the user does not have the corresponding access permission, refusing to display associated information of the target information to the user such that leakage of associated information in document collaborative work can be reduced, the security of document collaborative work can be improved, and the display of associated information of document can be flexibly controlled as needed.

### BRIEF DESCRIPTION OF THE DRAWINGS

In order to explain the technical solutions in the present disclosure or associated technology more clearly, the drawings needed to be used in the description of embodiments or associated technology will be briefly introduced below. Obviously, the drawings in the following description are only the embodiments of the present disclosure. For those skilled in the art, other drawings can be obtained according to these drawings without creative work.
Fig. 1 is a schematic diagram of a document access architecture according to an embodiment of the present disclosure.
Fig. 2 is a schematic diagram of a hardware structure of an exemplary electronic device according to an embodiment of the present disclosure.
Figs. 3A-3C are schematic diagrams of an access permission setting interface according to an embodiment of the present disclosure.
Figs. 4A-4B are schematic views of an access interface according to an embodiment of the present disclosure.
Fig. 5 is a schematic diagram of a user identifier permission setting interface according to an embodiment of the present disclosure.
Fig. 6 is a schematic diagram of an access interface according to an embodiment of the present disclosure.
Fig. 7 is a schematic diagram of a referenced document access permission setting panel according to an embodiment of the present disclosure.
Figs. 8A-8B are schematic views of an access interface according to an embodiment of the present disclosure.
Fig. 9 is a schematic diagram of an access permission setting interface according to an embodiment of the present disclosure.
Fig. 10 is a schematic diagram of a collaborator permission setting interface according to an embodiment of the present disclosure.
Fig. 11 is a schematic diagram of a user identifier permission setting interface according to an embodiment of the present disclosure.
Figs. 12A-12C are schematic diagrams of a collaborator access interface according to an embodiment of the present disclosure.
Figs. 13A-13B are schematic diagrams of a user identifier access interface according to an embodiment of the present disclosure.
Figs. 14A-14B are schematic diagrams of a reference document access interface according to an embodiment of the present disclosure.
Fig. 15 is a schematic diagram of an access permission setting interface of a child page according to an embodiment of the present disclosure.
Fig. 16 is a schematic diagram of principle of an access method according to an embodiment of the present disclosure.
Fig. 17 is a flowchart of a document access method according to an embodiment of the present disclosure.
Fig. 18 is a schematic diagram of a document accessing apparatus according to an embodiment of the present disclosure.

### DETAILED DESCRIPTION OF PREFERRED EMBODIMENTS

In order to make the objective, technical solution and advantages of the present disclosure clearer, the present disclosure will be further described in detail with reference to specific embodiments and drawings.

It should be noted that, unless otherwise defined, technical terms or scientific terms used in the embodiments of the present disclosure should have their ordinary meanings as understood by people with ordinary skills in the field to which the present disclosure belongs. The words "first", "second" and similar words used in the embodiments of the present disclosure do not indicate any order, quantity or importance, but are only used to distinguish different components. Similar words such as "comprising" or "including" mean that the elements or objects appearing before the word cover the elements or objects listed after the word and their equivalents, without excluding other elements or objects. Similar words such as "connected" or "connection" are not limited to physical or mechanical connection, but can comprise electrical connection, whether direct or indirect. "Up", "Down", "Left" and "Right" are only used to indicate the relative positional relationship. When the absolute position of the described object changes, the relative positional relationship may also change accordingly.

At present, when visitors visit a document, they can directly see the information associated to the document, such as the author information of the document, the information of other visitors who have visited or evaluated the document, etc. This may lead to the risk of leakage of information associated to these documents, which reduces the security of document collaboration. In addition, users (such as authors and uploaders) who use the document may want to control the relevant information of the document according to their own needs and open different relevant information to different types of visitors. Therefore, how to reduce the leakage of associated information in document collaborative work, improve the security of document collaborative work, and flexibly control the associated information of document has become an urgent technical problem.

In view of this, embodiments of the present disclosure provide a document access method, apparatus, device, storage medium and program product. By setting the access permissions to target information such as a link of a second document, a collaborator of a first document and a user identifier displayed in the first document respectively, the target information can be displayed to different degrees for users with different access permissions. When the user does not have the corresponding access permission, refusing to display the associated information of the target information to the user such that leakage of associated information in document collaborative work can be reduced, the security of document collaborative work can be improved, and the display of associated information of document can be flexibly controlled as needed.

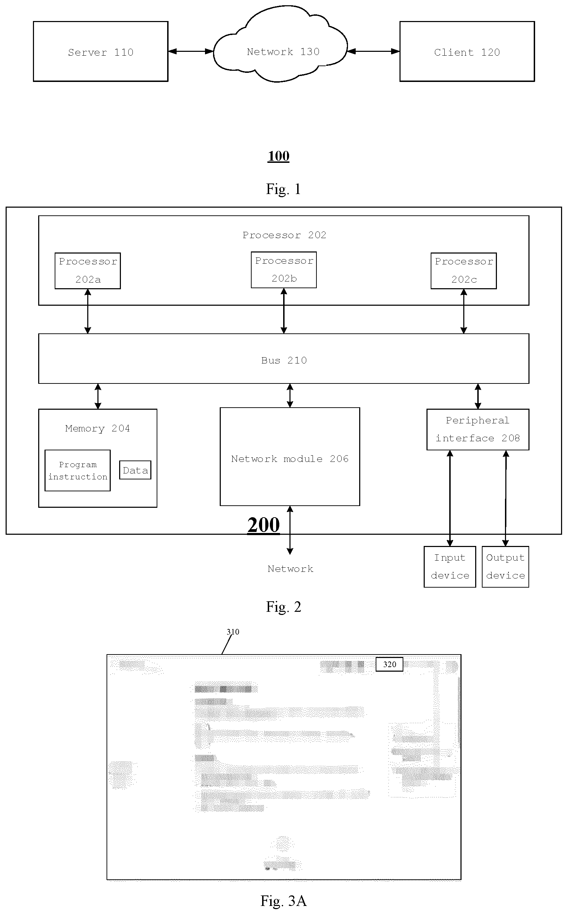

Fig. 1 shows a schematic diagram of a document access architecture according to an embodiment of the present disclosure. Referring to Fig. 1, the document access architecture 100 may comprise a server 110, a terminal 120, and a network 130 providing a communication link. The server 110 and the terminal 120 can be connected through a wired or wireless network 130. Wherein the server 110 can be an independent physical server, a server cluster consisting of multiple physical servers or a distributed system, and a cloud server that provides basic cloud computing services such as cloud services, cloud databases, cloud computing, cloud functions, cloud storage, network services, cloud communication, middleware services, domain name services, security services, CDN, and big data and artificial intelligence platforms.

The terminal 120 may be implemented in hardware or software. For example, when the terminal 120 is implemented in hardware, it can be various electronic devices with display screens and supporting page display, comprising but not limited to smart phones, tablet computers, e-book readers, laptop computers and desktop computers. When a device of the terminal 120 is implemented in software, it can be installed in the electronic devices listed above; it can be implemented as multiple software or software modules (for example, software or software modules used to provide distributed services) or as a single software or software module, which is not specifically limited here.

It should be noted that the document access method provided by the embodiment of the present application can be executed by the terminal 120 or the server 110. It should be understood that the number of terminals, networks and servers in Fig. 1 is only for illustration and is not intended to be limiting. There can be any number of terminals, networks and servers according to the needs of implementation.

Fig. 2 shows a schematic diagram of a hardware structure of an exemplary electronic device 200 provided by an embodiment of the present disclosure. As shown in Fig. 2, the electronic device 200 may comprise a processor 202, a memory 204, a network module 206, a peripheral interface 208 and a bus 210. Wherein the processor 202, the memory 204, the network module 206 and the peripheral interface 208 communicate with each other through the bus 210 inside the electronic device 200.

The processor 202 may be a Central Processing Unit (CPU), an image processor, a neural network processor (NPU), a microcontroller (MCU), a programmable logic device, a digital signal processor (DSP), an application specific integrated circuit (ASIC), or one or more integrated circuits. The processor 202 may be used to perform functions associated to the techniques described in the present disclosure. In some embodiments, the processor 202 may also comprise multiple processors integrated into a single logical component. For example, as shown in Fig. 2, the processor 202 may comprise a plurality of processors 202a, 202b, and 202c.

The memory 204 may be configured to store data (e.g., instructions, computer code, etc.). As shown in Fig. 2, the data stored in the memory 204 may comprise program instructions (for example, a program instruction for implementing the document access method of the embodiment of the present disclosure) and data to be processed (for example, the memory may store configuration files of other modules, etc.). The processor 202 can also access the program instructions and data stored in the memory 204 and execute the program instructions to operate on the data to be processed. The memory 204 may comprise volatile storage or nonvolatile storage. In some embodiments, the memory 204 may comprise random access memory (RAM), read-only memory (ROM), optical disk, magnetic disk, hard disk, solid state hard disk (SSD), flash memory, memory stick, etc.

The network module 206 may be configured to provide the electronic device 200 with communication with other external devices via a network. The network can be any wired or wireless network capable of transmitting and receiving data. For example, the network may be a wired network, a local wireless network (e.g., Bluetooth, WiFi, Near Field Communication (NFC), etc.), a cellular network, the Internet, or a combination thereof. It can be understood that the types of networks are not limited to the above specific examples. In some embodiments, the network module 306 may comprise any combination of any number of network interface controllers (NICs), radio frequency modules, transceivers, modems, routers, gateways, adapters, cellular network chips, etc.

The peripheral interface 208 may be configured to connect the electronic device 200 with one or more peripheral devices for information input and output. For example, peripheral devices can comprise keyboard, mouse, touchpad, touch screen, microphone, various sensors and other input devices, as well as display, speaker, vibrator, indicator light and other output devices.

The bus 210 may be configured to transfer information between various components of the electronic device 200 (e.g., the processor 202, the memory 204, the network module 206, and the peripheral interface 208), such as an internal bus (e.g., the processor-memory bus), an external bus (USB port, PCI-E bus), and the like.

It should be noted that although the above architecture of the electronic device 200 only shows the processor 202, the memory 204, the network module 206, the peripheral interface 208 and the bus 210, in the specific implementation process, the architecture of the electronic device 200 may also comprise other components necessary for normal operation. In addition, it can be understood by those skilled in the art that the architecture of the electronic device 200 described above may also comprise only the components necessary to realize the solution of the embodiment of the present disclosure, and it is not necessary to comprise all the components shown in the figure.

User userA uploads a first document to the cloud, and the user userA is, then, the document owner userA of the first document. UserA, the document owner, can share the first document with other users and set corresponding access permissions for each user. For example, the document owner userA can display a preset sharing panel in the current interface of the first document by triggering a sharing control of the first document. Through an "Invite Collaborators" control of the sharing panel, other users, userB, useC and userD, are invited as collaborators to visit the first document for collaborative work of the document. Collaborators may refer to users (such as users userB, userC, userD) actively added by the document owner userA to a list of users accessible to the first document, or members of user groups actively added by the document owner userA to groups, organizational structures, etc. in the list of users accessible to the first document. It should be understood that the document owner userA can directly set the access permissions of individual collaborators, for example, directly set the access permission of a collaborator to E; or can also set the access permission of a group of collaborators in batches. For example, if a set of collaborators (such as a group, a department, etc.) has access permission of F, then all collaborators in this set have access permission of F. In some embodiments, collaborators of the first document may invite other users or user sets as new collaborators of the first document. For example, the collaborator userC may invite userE to access the first document as a collaborator; further, the collaborator userC can also set access permission of userE when inviting userE. Furthermore, the access permission of the invited collaborator is not higher than that of the inviting collaborator.

The document owner userA can set access permission of each collaborator when sending invitation to collaborators userB, userC and userD. In some embodiments, an access permission of a collaborator may comprise read permission, edit permission or manage permission. Wherein the read permission means that the collaborator can access and read content of the first document, but he/she cannot do any operation on the first document, such as editing and commenting. Edit permission means that the content of the first document can be accessed and read, and the content of the first document can be edited, such as modification, addition, removal, etc. Manage permission means that the first document can be accessed, read, edited and managed by the collaborator (such as modifying access permission of a collaborator or removing a collaborator). For example, when the document owner userA invites the collaborator userB to access the first document, the document owner userA can set the access permission of the collaborator userB to be read permission. Similarly, the document owner userA can set the access permission of the collaborator userC to be edit permission and the access permission of the collaborator userD to be manage permission.

In some embodiments, a collaborator with manage permission may have the same access permission to the first document as the document owner. For example, both the visitor userD and the document owner userA with manage permission can access and read the document, edit the document and manage the collaborators (such as modifying access permission of a collaborator or removing a collaborator).

When collaborators access, edit or manage the first document, each access, edit or manage operation will be recorded. For example, when collaborator userC modifies the content textA of the first document, modification time T1, modifier collaborator userC, modification marks, the content before and after modification and so on will be recorded in corresponding positions of the content textA. In traditional access mode, when collaborator userB with read permission accesses the first document, collaborator userB can read the content in the first document. Here, although collaborator userB has no permission to edit the content of the first document, collaborator userB can see associated information of other collaborators invited by the document owner userA, which may comprise personal information of the collaborator and operation information of the first document. For example, collaborator userB can see information of collaborator userC and collaborator userD, which may cause the information of the collaborator userC and the collaborator userD to be leaked, and reduce the security of the collaborative work of the first document.

According to the present disclosure, the document owner userA or a collaborator with manage permission can manage and control various kinds of target information displayed in document content of the first document, so as to disclose the associated content of the target information in the document content to visitors with different access permissions to different degrees, so as to reduce the leakage of the associated content of the target information and improve the security of document collaboration.

User userR can send a first access request to the first document; after receiving the first access request of the user userR, it is determined whether the user userR has a first access permission (for example, read permission, edit permission or manage permission) of the first document. If the user userR does not have the first access permission, refusing to display the document content of the first document. If the user userR has the first access permission, displaying the document content of the first document. Wherein the document content of the first document comprises all the content recorded in the first document, such as text, directory, comments, etc.

When displaying the document content of the first document to the user userR, the target information can be displayed in the document content, and the user userR can send a second access request for the target information to request access to the associated content of the target information. As the document owner userA or a collaborator with manage permission respectively sets the access permissions of various target information displayed in the document content of the first document, it can be determined whether the user userR has access permission to the target information in the second access request, and if so, the associated content of the target information can be displayed; if he/she does not have access to the target information, refusing to display the associated content of the target information. Thereby avoiding the risk of leaking the associated content of the target information, and improving the security of the document collaboration process.

In some embodiments, the target information displayed in the document content may comprise at least one of the following: a collaborator of the first document, a user identifier displayed in the first document, and a link to a second document.

A collaborator of the first document may refer to a user who is actively invited by the document owner to access the document. Further, the associated content of the collaborator in the first document may comprise at least one of the following: a collaborator's representation (such as an avatar), a collaborator's ID (such as a collaborator's name, a collaborator's numeral, etc.), and an organization where the collaborator belongs (such as a unit, a department, etc.).

The user identifier displayed in the first document may refer to all user identifiers appearing in the first document. Further, at least one of the following can be comprised: user identifier of comment area, user identifier in text of the first document, user identifier of content component of the first document, user identifier of collaborator interface, and user identifier of real-time collaboration area. Wherein the content component can comprise at least one of the following: information collection component, schedule component, group business card component, lottery component, voting component and likes component; the user identifier of the real-time collaboration area may refer to the user identifier (e.g., user avatar) that is displayed in a specific area of the first document (e.g., the top bar of the interface) and is visiting the first document. Further, the user identifier displayed in the first document may refer to the user's avatar, and the associated content may comprise at least one user identifier (for example, user name, user numeral, etc.) and the organization where the user belongs (for example, unit, department, etc.).

A link to a second document in the first document may refer to a link to a reference document embedded in the first document. Further, the linked associated content of the second document may comprise the document content of the second document and the like.

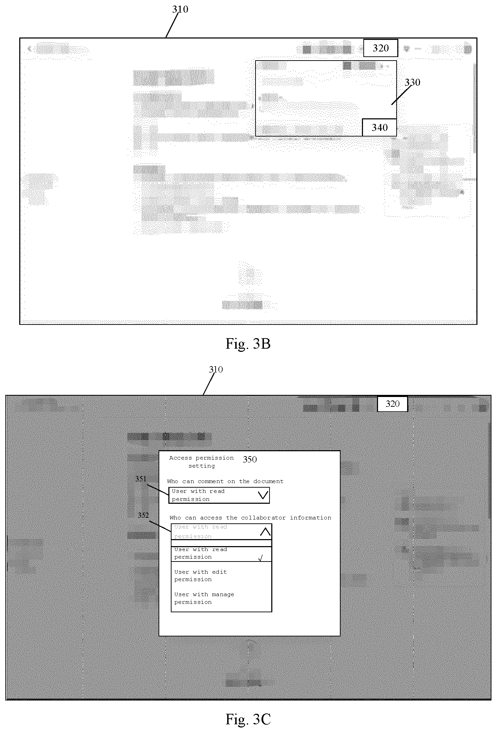

Referring to Figs. 3A-3C, Figs. 3A-3C show schematic diagrams of an access permission setting interface according to an embodiment of the present disclosure. In Fig. 3A, a first interface 310 of a first document is displayed to a document owner userA or collaborator userD with manage permission. The first interface 310 comprises a preset control 320. The document owner userA or the collaborator userD with manage permission performs a first trigger operation O1 (for example, click operation) on the preset control 320, and displays a collaborator interface 330 in the first interface 310, as shown in Fig. 3B. In Fig. 3B, the collaborator interface 330 comprises a setting control 340, and the document owner userA or the collaborator userD with manage permission performs a second trigger operation O2 on the setting control 340, and a permission setting panel 350 is displayed in the first interface 310, as shown in Fig. 3C. Here, the collaborator interface 330 may be hidden. In Fig. 3C, the permission setting panel 350 comprises a plurality of permission setting controls to set access permission of various target information or operations.

In some embodiments, the first permission setting control 351 may set a comment permission. For example, when it is set that users with read permission can comment on the document, users with read permission, edit permission and manage permission (such as users userB-userD) can comment on the first document.

In some embodiments, the second permission setting control 352 may set access permission of collaborator information. For example, the second permission setting control 352 may provide an option option1 for selecting access permission, which may comprise users with read permission, users with edit permission, or users with manage permission. UserA, the owner of the document, or userD, a collaborator with manage permission, can determine the access permission of collaborator information from option option1. For example, if user with read permission in option option1 is selected, it means that users with read permission, edit permission and manage permission (such as users userB, userC and userD) can access the associated content of collaborators of the first document. For another example, the document owner userA or the collaborator userD with manage permission can select user with edit/ manage permission in option option1, which means that users with edit and manage permissions (such as users userC and userD)/ users with manage permission (such as user userD) can access the associated content of the collaborators of the first document.

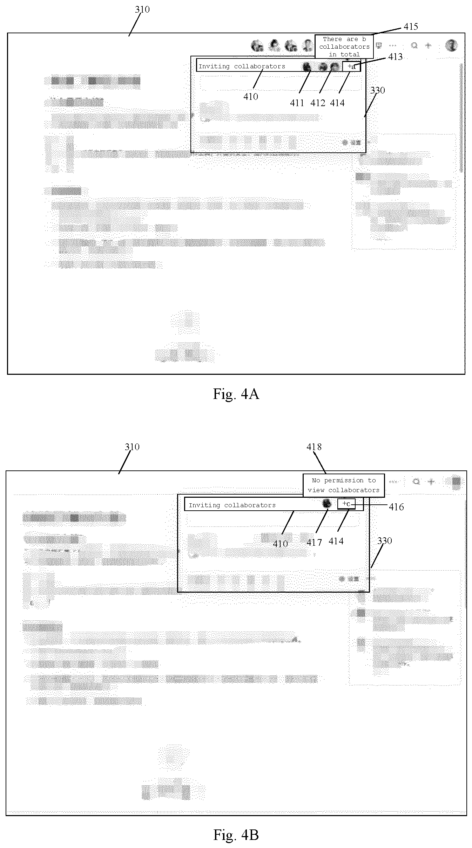

Referring to Figs. 4A-4B, Figs. 4A-4B show schematic views of an access interface according to an embodiment of the present disclosure. In Fig. 4A, a preset control can be set when user userR accesses the first interface 310 of the first document. By triggering the preset control, an access request quest1 for collaborators can be sent, and the collaborator interface 330 of the first document can be displayed in response to the access request quest1. When the user userR has access permission to collaborators, displaying the associated content (e.g., collaborator ID) of at least some collaborators (e.g., a preset number of collaborators) in a collaborator information area 410 of the collaborator interface 320. For example, in the collaborator information area 410, an identifier of the document owner 411, an identifier of the partial collaborator 412, the number of collaborators not having identifiers shown 413 (for example, +a, a can be a natural number) and a fold control 414 are displayed. Further, the number of collaborators 413 not having identifiers shown can be displayed in the fold control 414. When the touching point hovers at the number of collaborators 413 not having identifiers shown, the total number b of collaborators can be displayed, and b can be a natural number, for example, by popping up a message 415.

In Fig. 4B, when the user userR does not have the access permission to collaborators, it can refuse to display identifiers of the collaborators of the first document in the collaborator interface 330; or it can display only the total number of collaborators 416 and/or the identifier of the document owner 417, while refusing to display the identifiers of other collaborators except the owner, for example, in the collaborator information area 410. Further, the fold control 414 displayed in the collaborator interface 330 is in a non-triggerable state. Further, when the touching point hovers or triggers at the total number of collaborators 414 (e.g. +c) or the fold control 414, a pop-up message 418 can also be used to prompt the current collaborator that he/she does not have the permission to view collaborators. Here, the current user userR can perform a third trigger operation O3 on the identifier of the document owner 417, so that it can display the associated content of the document owner (for example, profile information of the document owner, comprising the name of the document owner, the avatar of the document owner, the signature of the document owner, the organization where the document owner belongs, etc.) in the form of a pop-up window. Further, one can also add remark information to the document owner, add the document owner as a contact, and so on through the pop-up window. It can be seen that according to the embodiment of the present disclosure, by setting the access permission of the associated content of the collaborator of the first document, the disclosure of the associated content of the collaborator can be accurately and flexibly controlled as required, the security control requirements of the associated content of the collaborator can be met, leakage of the associated content of the collaborator can be reduced, and the security of document sharing and collaborative work can be improved.

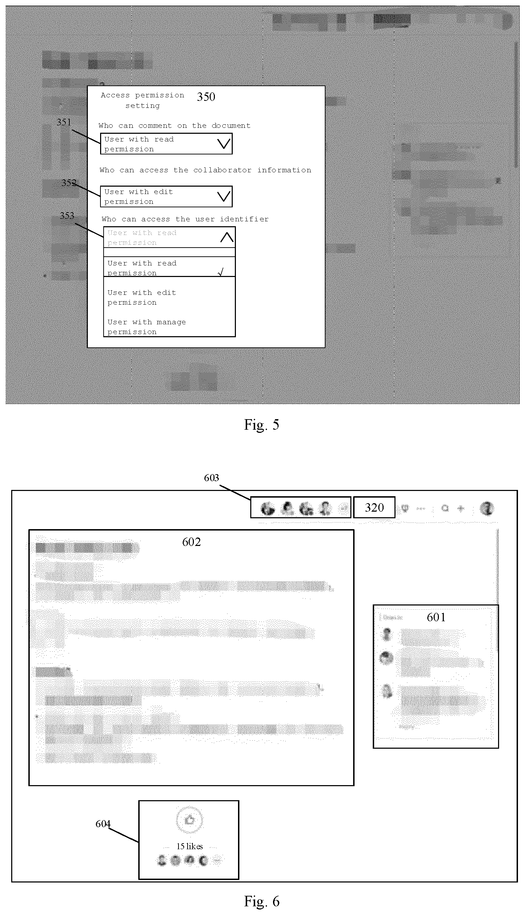

In some embodiments, the permission setting panel 350 shown in Fig. 3C may further comprise a third permission setting control 353, as shown in Fig. 5. Fig. 5 shows a schematic diagram of a user identifier access permission setting panel according to an embodiment of the present disclosure. The third permission setting control 353 may set the access permission of the user identifier displayed in the first document. For example, in Fig. 5, the third permission setting control 353 may provide an option option2 for selecting access permission, which may comprise a user with read permission, a user with edit permission or a user with manage permission. UserA, the owner of the document, or userD, a collaborator with manage permission, can determine access permission to the associated content of user identifier from option option2. For example, if the user with read permission in option option2 is selected, it means that users with read permission, edit permission and manage permission (such as userB, userC and userD) can access the associated content of user identifier of the first document. For another example, the document owner userA or the collaborator userD with manage permission can select the user with edit/manage permission in option option2, which means that users with edit and manage permissions (such as userC and userD)/ users with manage permission (such as userD) can access the associated content of user identifier of the first document.

After the access permission of the associated content of user identifier is set through the third permission setting control 353, profile information of all the user identifiers appearing in different areas of the first document is only displayed to users with corresponding access permissions. Referring to Fig. 6, Fig. 6 shows a schematic diagram of an access interface according to an embodiment of the present disclosure. In Fig. 6, the user identifier will appear in each of the comment area 601, text area 602, real-time collaboration area 603 and content component 604 of the first document, which can be the user identifier of the collaborator or document owner. The user identifier appearing in the content component 604 may further comprise the user identifier in the information collection component, the user identifier referring (e.g. @) the component, the user identifier involved in the schedule component, the user identifier in the group business card component, the user identifier in the lottery component, the user identifier in the likes component, the user identifier in the voting component, and the like.

In the traditional mode, when accessing the first document, a user with any permission can perform a fourth trigger operation O4 for any user identifier that appears in all document areas of the first document, whereby, the associated content of user identifier will be displayed through a pop-up window, such as the profile information of the user, comprising the user name, avatar, signature, organization, etc. Further, the user can also be added with remark information, added as a contact and so on through the pop-up window. This may lead to the disclosure of personnel information in the process of document sharing and collaboration, and reduce the security of document sharing and collaboration.

According to the embodiment of the present disclosure, after the access permission to the user identifier is set, the user who does not have the access permission to the user identifier can only see the user identifier and cannot access the associated content of the user identifier. The user userR may perform a fifth trigger operation O5 on the user identifier to send an access request quest2 for the user identifier. When the user userR does not have access permission to the user identifier, in response to the access request quest2, it can refuse to display the user information corresponding to the user identifier, for example, it can refuse to display the profile information of the user corresponding to the user identifier, and the current access user userR can be reminded that he/she does not have access permission to the user identifier by a pop-up message (not shown). When the user userR has the access permission to the user identifier, in response to the access request quest2, the associated content of the user identifier, such as the profile information corresponding to the user identifier, can be displayed through a pop-up window. Therefore, according to the embodiment of the present disclosure, by setting the user identifier access permission, the disclosure of the user identifier can be accurately and flexibly controlled as required, the information leakage of collaborative users can be reduced, and the security of document sharing and collaborative work can be improved.

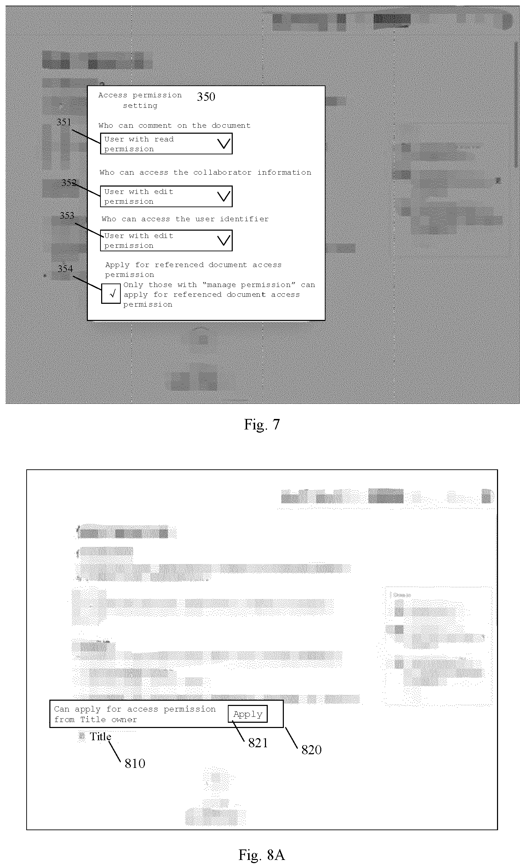

In some embodiments, the permission setting panel 350 shown in Fig. 3C may further comprise a fourth permission setting control 354, as shown in Fig. 7. Referring to Fig. 7, Fig. 7 shows a schematic diagram of an access permission setting panel of a referenced document according to an embodiment of the present disclosure. The fourth permission setting control 354 may set access permission to a document referenced in the document. In Fig. 7, the fourth permission setting control 354 comprises a selected state and an unselected state, wherein the selected state indicates that a user with manage permission can access or apply for access to the referenced document, for example, displaying an portal for requesting to view the content of the referenced document; and users with other access permissions cannot access the referenced document; the unselected status means that a user who can access the first document can access or apply for access to the referenced document, that is, any collaborator can access the referenced information.

In some embodiments, the fourth permission setting control 354 may also provide an option option3 for selecting access permission, which may comprise a user with read permission, a user with edit permission or a user with manage permission. UserA, the owner of the document, or userD, a collaborator with manage permission, can determine the access permission to personnel information from the option option3. For example, if the collaborator with read permission in the option option3 is selected, it means that users with read permission, users with edit permission or users with manage permission (such as users userB, userC and userD) can access or apply for access to the referenced document of the first document. For another example, the document owner userA or the collaborator userD with manage permission can select the collaborator with edit/manage permission in the option option2, which means that users with edit permission or users with manage permissions (such as users userC and userD)/users with manage permission (such as user userD) can access the referenced document of the first document. After the permission to referenced document is set through the fourth permission setting control 354, the referenced document appearing in the first document is only displayed to collaborators with corresponding access permissions.

Referring to Figs. 8A-8B, Figs. 8A-8B show schematic views of an access interface according to an embodiment of the present disclosure. In the traditional mode, as shown in Fig. 8A, the user userR can send an access request to the referenced document Title displayed in the first document. Specifically, a link 810 of the reference document Title is displayed in the first document, the user userR can perform a sixth trigger operation O6 on this link to generate an access request quest3 for the referenced document Title. It can be determined whether the user userR has access permission to the referenced document Title. If the user userR has access permission to the referenced document Title, in response to the access request quest3, the document content with the referenced document Title can be directly displayed, or a permission application portal corresponding to the link 810 of the referenced document Title can be displayed. The permission application portal may comprise displaying a permission application control 821 in the associated area 820 of the referenced document in the first document, or a permission application page (not shown) of the link 810 of referenced document Title.

If the user userR does not have the access permission to the link 810 of the referenced document Title, in response to the access request quest3, the display state of the link 810 of the referenced document Title can be modified, for example, different from the display state of the link 810 in Fig. 8A, to indicate that the current user userR does not have the permission to view the referenced document or apply for viewing the referenced document. Further, in response to the access request quest3, the link 810 of the referenced document Title can also be set to a state that cannot be triggered. Furthermore, in response to the access request quest3, the currently accessed user may also be prompted that he/she does not have the permission to view the referenced document Title or apply for viewing the referenced document Title, for example, by popping up a message 830. Therefore, according to the embodiment of the present disclosure, by setting the permission to access the referenced document, the viewing or viewing permission of the referenced document can be accurately and flexibly controlled as required, and the security of document sharing and collaborative work can be improved.

It should be understood that each interface or panel shown in Figs. 3A-8B may be an example of a method deployed in a type of terminal (such as PC terminal) according to an embodiment of the present disclosure, and is not intended to limit the deployment of any terminal. According to the embodiment of the present disclosure, it can also be deployed in another type of terminal, such as mobile terminal (e.g., smart phone, smart tablet, smart wearable device), etc., and there is no restriction here.

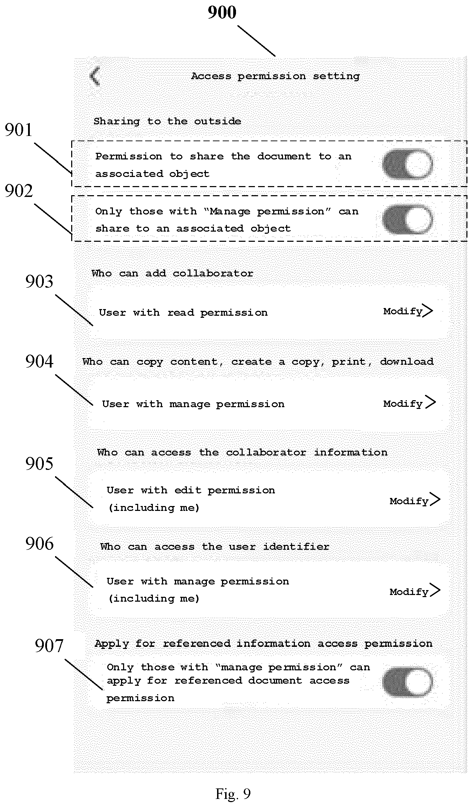

Referring to Fig. 9, Fig. 9 shows a schematic diagram of an access permission setting interface according to an embodiment of the present disclosure. As shown in Fig. 9, the access permission setting interface 900 can comprise multiple controls, and each control can be configured to set a corresponding permission. In some embodiments, a visitor userD with manage permission may have the same setting permission to the first document as the document owner userA to set the access permission to the target information in the first document.

In Fig. 9, the document owner userA can set a first document sharing permission through a first control 901 and a second control 902: the first control 901 can be configured to set whether the first document is allowed to be shared to an associated object, for example, when the first control 901 is in an open state, it means that the first document is allowed to be shared to the associated object; when the first control 901 is in a closed state, it means that the first document is not allowed to be shared to the associated object. Here, a user with any permission cannot share the first document to the associated object. The second control 902 can be configured to set access permission to the associated object that can be shared with, and can be set when the first control 901 is in the open state. When the second control 902 is in the open state, the second control 902 can set the corresponding access permission to share the first document to the associated object. For example, the second control 902 can set that "manage permission only" can share the first document to the associated object, which means that a user with manage permission only can share the first document to the associated object. When the second control 902 is in the closed state, since the first control 901 is in the open state, it can mean that any user can share the first document to the associated object.

Wherein the associated object may refer to a group comprising visitors sharing the first document or individuals associated with the visitors. For example, a user userD with manage permission can share the first document to a group comprising the user userD, or an individual associated with the user userD (for example, an individual in the contact list of the user userD). When the first control 901 is in the closed state, the second control 902 is also in the closed state accordingly.

In Fig. 9, the document owner userA can set access permission to an add collaborator operation of the first document through a third control 903, which means that another user can be directly invited to access the first document without going through the document owner userA. The third control 903 can provide the option option1 of the access permission, which option can comprise a user with read permission, a user with edit permission or a user with manage permission. The document owner userA determines the corresponding access permission from the option option1. For example, if the document owner userA selects a user with read permission in the option option1, it means that users with read permission, edit permission and manage permission (such as users userB, userC and userD) can add new collaborators.

In Fig. 9, the document owner userA can set access permission to a copying operation on the first document through a fourth control 904, which can mean at least one of copying the contents thereof, creating a copy thereof, printing or downloading the document. Similar to the add collaborator permission, the fourth control 904 can provide the option option2 of the access permission, which option can comprise a user with read permissions, a user with edit permission or a user with manage permission. The document owner userA determines the corresponding access permission from the option option2. For example, if the document owner userA selects a user with read permission (such as users userB, userC and userD) in the option option2, it means that users with read permissions, edit permissions and manage permissions can copy the content of the first document, create copies of the first document, print or download the first document.

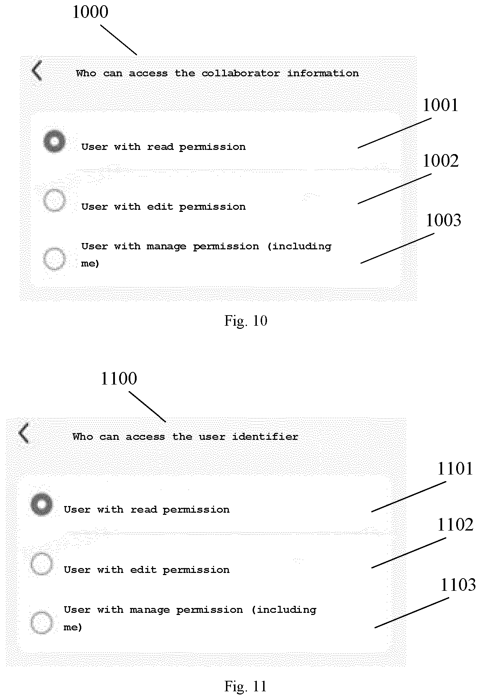

In Fig. 9, the document owner userA can set access permission to collaborators of the first document through a fifth control 905. The document owner userA can perform an eighth trigger operation O8 on the fifth control 905, and then can switch from the permission setting interface 900 to the collaborator permission setting interface 1000, as shown in Fig. 10, which shows a schematic diagram of a collaborator permission setting interface according to an embodiment of the present disclosure. In Fig. 10, the collaborator information permission setting interface 1000 can provide a plurality of option controls 1001-1003. The option control 1001 is configured to indicate that a user with read permission can access collaborator information, the option control 1002 is configured to indicate that a user with edit permission can access collaborator information, and the option control 1003 is configured to indicate that a user with manage permission can access collaborator information. In some embodiments, a user with manage permission may also comprise the document owner userA.

In Fig. 9, the document owner userA can set access permission to the user identifier of the first document through a sixth control 906. The document owner userA can perform a ninth trigger operation O9 on the sixth control 906, and then switch from the permission setting interface 900 to the user identifier permission setting interface 1100, as shown in Fig. 11, which shows a schematic diagram of a user identifier permission setting interface according to an embodiment of the present disclosure. The user identifier permission setting interface 1100 in Fig. 11 can provide a plurality of option controls 1101-1103. The option control 1101 is configured to indicate that a user with read permission can access the user identifier, the option control 1102 is configured to indicate that a user with edit permission can access the user identifier, and the option control 1103 is configured to indicate that a user with manage permission can access the user identifier. In some embodiments, a user with manage permission may also comprise the document owner userA.

In Fig. 9, the document owner userA can set permission to access referenced document through a seventh control 907, and the low access permission can be a read permission, an edit permission, or a manage permission. In Fig. 9, a seventh control 907 indicates whether a user with manage permission can access the referenced document or apply for access to the referenced document. Here, when the seventh control 907 is in an open state, it means that a user with manage permission can access the referenced document or apply for access to the referenced document; when the seventh control 907 is in a closed state, it means that no user can access the referenced document or apply for access to the referenced document.

UserA, the owner of the document, can set access permission to all kinds of target information in the first document at any time, so as to achieve different levels of control over the associated content of the target information in different scenes.

User userR can send a first access request to a first document when accessing the first document; the first access request may comprise access permission authority_R of the user userR. It can be determined whether the access permission authority_R can access the first document. If the user userR does not have the first access permission (for example, read permission, edit permission or manage permission) to access the first document, refusing to display the document content of the first document. If the user userR has the first access permission, displaying the document content of the first document.

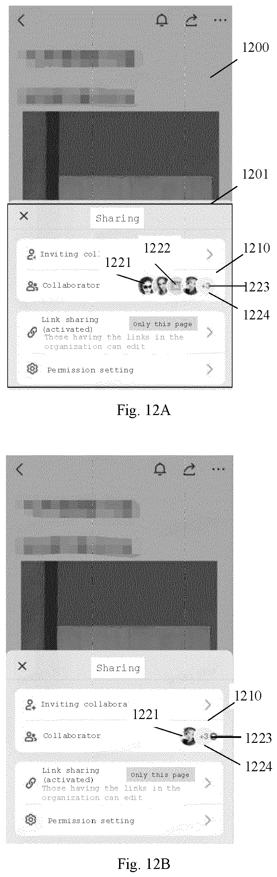

As shown in Figs. 12A-12C, Figs. 12A-12C illustrate schematic views of a collaborator access interface according to an embodiment of the present disclosure. In Fig. 12A, a preset control can be set in the interface 1200 of the first document, and the user userR can trigger the preset control to display the collaborator interface 1201. When the user userR has access permission to collaborators, the associated content of some collaborators can be displayed in the collaborator information area 1210 of the collaborator interface 1201, for example, at least one of the identifier of the owner 1221, the identifier of the collaborator 1222, the number of collaborators 1223 and the fold control 1224 of the first document is displayed in the collaborator information area 1210. Further, the number of collaborators 1223 is displayed in the fold control 1224. The user userR can also perform a tenth trigger operation O10 for the identifier of the collaborator 1222, and in response to this tenth trigger operation O10, a display interface (not shown) for displaying the associated content of collaborator can be switched. Further, the identifier of the collaborator 1222 may be the identifiers of part of the collaborators, but not all the collaborators; here, the user can also perform a trigger operation on the fold identifier 1224 to display all the identifiers of the collaborator in the collaborator interface 1201.

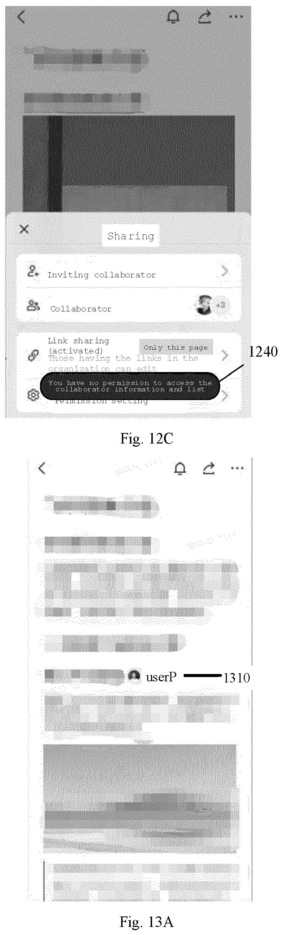

In Fig. 12B, when the user userR does not have access permission to the collaborator, refusing to show the identifier of the collaborator to the user userR. For example, only the identifier of the owner 1221, the number of collaborators 1223, the fold control 1224 are displayed in the collaborator information area 1210 while the identifier of the collaborator 1222 is hidden. Here, the fold control 1224 can be in a non-triggerable state. For example, the user userR performs an eleventh trigger operation O11 on the fold control 1224, the fold control 1224 is not triggerable. Further, the user userR may be prompted that he/she does not have the permission to access the collaborator, for example, by popping up a message 1240, as shown in Fig. 12C.

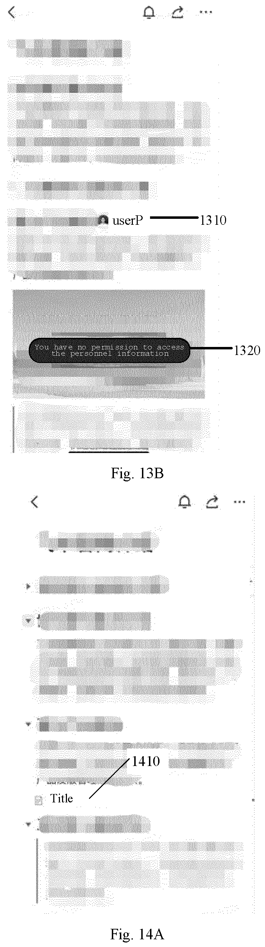

Referring to Figs. 13A-13B, Figs. 13A-13B show schematic diagrams of a user identifier access interface according to an embodiment of the present disclosure. Operation records (such as text editing, likes, comments) or associated information of the user userP on the first document may appear in different areas (such as text area, likes area, comments area, etc.) in the first document, and the user identifier 1310 of the user userP, such as user avator, personnel name, etc., can be displayed in the first document. If the user userR has access to the user identifier 1310, the user userR is allowed to access the user identifier 1310 of the user userP. Further, the user userR can perform a twelfth trigger operation O12 on the user identifier 1310, and can display the associated content of the user identifier of the user userP to the user userR, comprising the name, age, gender, avatar, signature, etc. If the user userR does not have the access permission to the user identifier 1310, refusing to display the associated content of the user identifier of the user userP to the user userR. For example, the user userR can perform a 13th trigger operation O13 on the user identifier 1310, and can prompt the user userR that he/she does not have the permission to access the user identifier, for example, by popping up a message 1320, as shown in Figure 13B.

It should be understood that the embodiment of the present disclosure can not only control the access permission of the user identifier displayed in the first document, but also control the comment area, content component (comprising information collection, schedule, group business card, lottery, likes and votes), collaborator interface area (such as 320 in Figures 4A-4B and 1201 in Figures 12A-12B) of the first document based on the manner similar to that shown in Figures 13A-13B.

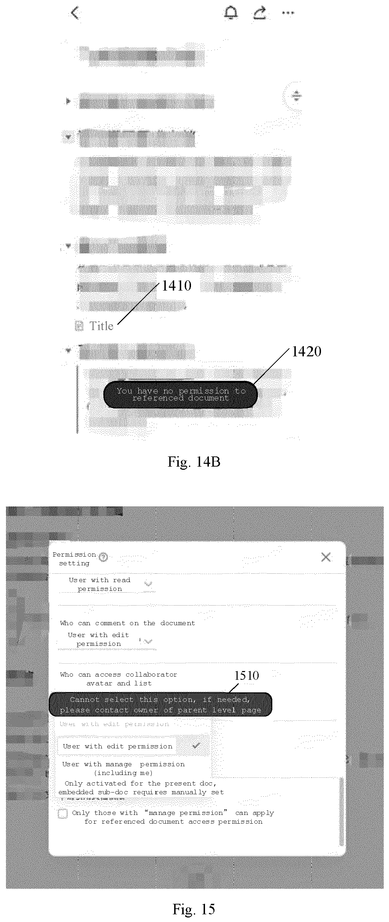

Referring to Figs. 14A-14B, Figs. 14A-14B show schematic diagrams of a referenced document access interface according to an embodiment of the present disclosure. As shown in Fig. 14A, a link 1410 of referenced document may be embedded in the first document. If the user userR has access permission to the referenced document Title, the link 1410 of referenced document can be displayed in the first document to the user userR based on a first display state (e.g., font, color, effect, etc.). Here, the link 1410 of referenced document is in a triggerable state. Further, the user userR can perform a 14th trigger operation O14 on the link 1410 of referenced document, and can switch to the referenced document interface or display content of the referenced document to the user userR through a pop-up window. A permission application portal corresponding to the link 1410 can also be displayed to the user user, for example, a permission application control is displayed in the associated area of the link 1410 in the first document, or a permission application page corresponding to the link 1410 is displayed. If the user userR does not have access permission to the referenced document Title, a link 1410 of referenced document can be displayed to the user userR in the first document based on a second display state different from the first display state, as shown in Fig. 14B. Further, the link 1410 of referenced document can be set to a non-triggerable state. Here, the user userR can perform a fifteenth trigger operation O15 on the link 1410 of referenced document, and it can refuse to switch to the referenced document content interface or refuse to display the permission application portal corresponding to the link 1410. For example, the permission application control or the permission application page is not displayed in the associated area of the link 1410 in the first document. Further, the user userR can be prompted that he/she does not have the permission to access the referenced document Title, for example, by popping up a message 1420, as shown in Fig. 14B.

The permission setting interface in Fig. 9 may be a parent page pageA for the first document, and the permission setting for the target information of a child page pageB of the parent page pageA may be set in the permission setting interface for the child page pageB, as shown in Fig. 15, which shows a schematic diagram of an access permission setting interface of a child page according to an embodiment of the present disclosure. In Fig. 15, the access permission level authority_C of various target information of the child page is higher than the access permission level authority_F of various target information of the corresponding parent page, which indicates that the access permission requirement of the associated information of the child page is higher, so as to meet the needs of users for centralized and strong viewing. That is to say, when setting the access permission to the child page, one can select the access permission level authority_F higher than the target information of the parent page. If the access permission level authority_C set to the child page is lower than the access permission level authority_F of the parent page, it can be prompted that the document owner userA or the visitor userD with manage permission cannot set it, and it is necessary to change the access permission level authority_C of the parent page, for example, by popping up a message 1510.

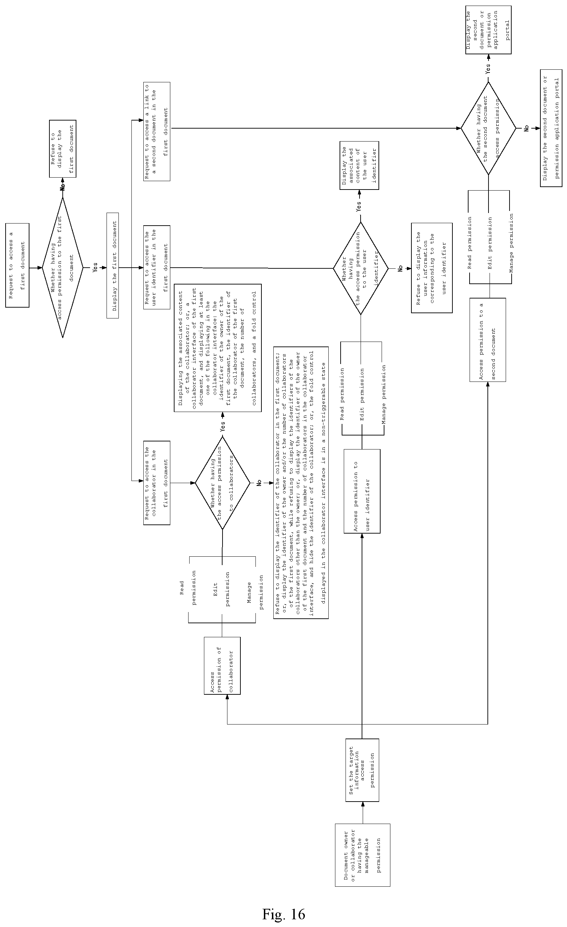

Referring to Fig. 16, Fig. 16 shows a schematic diagram of an access method according to an embodiment of the present disclosure. In Fig. 16, the document owner (for example, userA) or the collaborator with manage permission (for example, userD) can set respectively access permission to various target information in the document, as shown in Fig. 3C, Fig. 5, Fig. 7, Fig. 9-11, and Fig. 15, so as to flexibly control the disclosure degree of the target information of the document, thereby reducing the leakage of associated information and improving the security in the document collaboration process.

When the user userR requests to access the first document, determining whether the user userR has the first access permission to the first document. If the user userR has the first access permission to the first document, displaying the document content of the first document; if the user userR does not have the first access permission to the first document, refusing to display the document content of the first document.

The user userR may further request to access the collaborator in the first document, determining whether the user userR has the second access permission to access the collaborator in the first document according to the access permission of the collaborator set by the document owner or the collaborator with manage permission. For example, if the document owner or the collaborator with manage permission set the access permission of the collaborator as read permission, a user with read permission can access the collaborator. For another example, if the document owner or the collaborator with manage permission sets the access permission of the collaborator to be edit permission, then a user with edit permission can access the collaborator. For another example, if the document owner or the collaborator with manage permission sets the access permission of the collaborator as manage permission, the user with manage permission can access the collaborator. It should be understood that the user with manage permission can also have edit permission and read permission, and the user with edit permission also has read permission. If the user userR has the second access permission to access the collaborator in the first document, the associated content of the collaborator can be displayed; or, a collaborator interface of the first document is displayed, and at least one of the following is displayed in the collaborator interface: the identifier of the owner of the first document, the identifier of the collaborator of the first document, the number of collaborators, and a fold control. If the user userR does not have the second access permission to access the collaborator in the first document, refusing to display the identifier of the collaborator in the first document; or, displaying the identifier of the owner and/or the number of collaborators of the first document, while refusing to display the identifiers of the collaborators other than the owner; or, displaying the identifier of the owner of the first document and the number of collaborators in the collaborator interface, and hiding the identifier of the collaborator; or, the fold control displayed in the collaborator interface is in a non-triggerable state.

The user userR can further request access to the user identifier in the first document, determining whether the user userR has the second access permission to access the user identifier in the first document according to the access permission of the user identifier set by the document owner or the collaborator with manage permission. For example, if the document owner or collaborator with manage permission sets the access permission to the user identifier as read permission, then the user with read permission can access the user identifier. For another example, if the document owner or collaborator with manage permission sets the access permission of the user identifier as edit permission, then the user with edit permission can access the user identifier. For a further yet example, if the document owner or collaborator with manage permission sets the access permission to the user identifier as manage permission, the user with manage permission can access the user identifier.

If the user userR has the second access permission to access the user identifier in the first document, the associated content of the user identifier, such as the user information corresponding to the user identifier, can be displayed. If the user userR does not have the second access permission to access the collaborator in the first document, refusing to display the user information corresponding to the user identifier.

The user userR can further request to access a link of a second document in the first document (for example, the referenced document in Figs. 8A-8B and 14A-14B), determining whether the user userR has the second access permission to access the link of the second document in the first document according to the access permission of the user identifier set by the document owner or the collaborator with manage permission. For example, if the document owner or collaborator with manage permission sets the access permission to the link of the second document as read permission, a user with read permission can access the link of the second document. For another example, if the document owner or collaborator with manage permission sets the access permission to the link of the second document to be edit permission, a user with edit permission can access the link of the second document. For another example, if the document owner or collaborator with manage permission sets the access permission to the link of the second document as manage permission, a user with manage permission can access the link of the second document.

If the user userR has the second access permission to access the link of the second document in the first document, the document content of the second document or the permission application portal of the second document can be displayed, such as a permission application control displayed in the associated area of the link of the second document in the first document; or, a permission application page corresponding to the link of the second document. If the user userR does not have the second access permission to access the link of the second document in the first document, refusing to display the document content of the second document or the permission application portal of the second document.

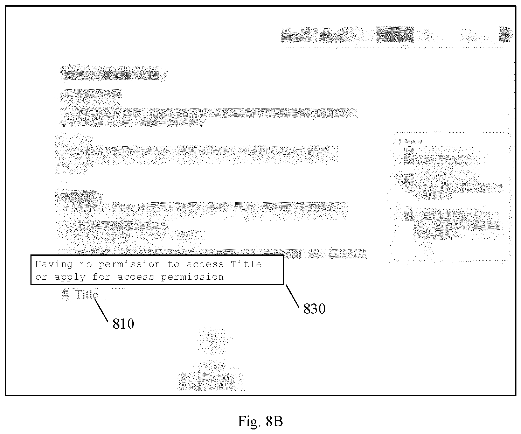

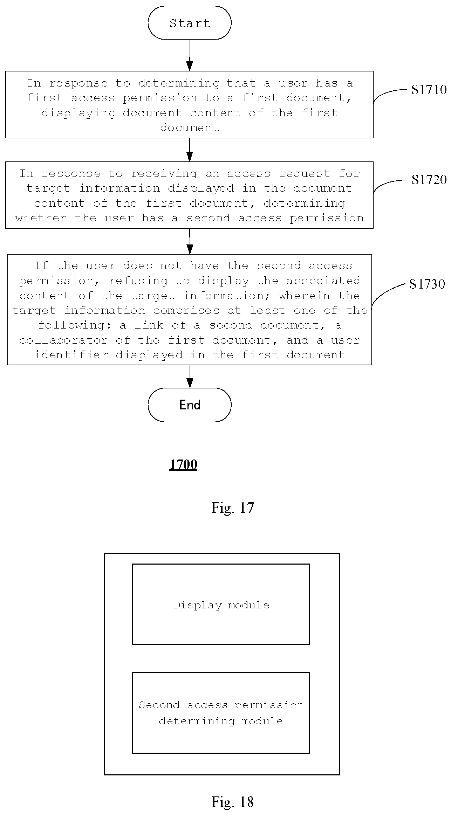

Referring to Fig. 17, Fig. 17 shows a flowchart of a document access method according to an embodiment of the present disclosure. In Fig. 17, a document access method 1700 may comprise the following steps:
Step S1710, in response to determining that a user has a first access permission to a first document, displaying document content of the first document (for example, the first document).
Step S1720, in response to receiving an access request for target information displayed in the document content of the first document (for example, collaborator in Figs. 4A-4B and Figs. 12A-12C, user identifier in Figs. 6 and 13A-13B, and link to referenced document in Figs. 8 and 14A-14B), determining whether the user has a second access permission (which can be the access permission to the target information, for example, the access permission of the collaborator set in Figs. 3C and 9, the access permission of the user identifier set in Figs. 5 and 10,, and the access permission of the referenced document set in Figs. 7 and 10).
Step S1730, if the user does not have the second access permission, refusing to display the associated content of the target information (for example, as shown in Fig. 4B, Fig. 8B, Fig. 12B-12C, Fig. 13B and Fig. 14B); wherein the target information comprises at least one of the following: a link of a second document (for example, a link of a reference document in Figs. 8 and 14A-14B), a collaborator of the first document (for example, a collaborator in Figures 4A-4B and 12A-12C), and a user identifier displayed in the first document (for example, a user identifier in Figs. 6 and 13A-13B).

In some embodiments, the target information comprises the link to the second document; if the user does not have the second access permission, the refusing to display the associated content of the target information comprises refusing to display a permission application portal corresponding to the link of the second document (for example, the permission application portal 821 in Fig. 8A).

In some embodiments, the permission application portal comprises a permission application control displayed in the associated area of the link of the second document in the first document; or a permission application page corresponding to the link of the second document.

In some embodiments, the target information comprises the link of the second document, and if the user does not have the second access permission, the method further comprises: modifying a display state of the link of the second document (for example, the link 810 of the second document in Fig. 8B and the link 1410 of the second document in Fig. 14B); and/or setting the link of the second document to a non-triggerable state.

In some embodiments, the target information comprises a collaborator of the first document; if the user does not have the second access permission, the refusing to display the associated content of the target information comprises:
refusing to display the identifier of the collaborator of the first document (for example, the identifier of the collaborator 412 in Fig. 4A and the identifier of the collaborator 1222 in Fig. 12A); or, displaying the identifier of the owner of the first document (for example, the identifier of the owner 417 in Fig. 4B and the identifier of the owner 1221 in Fig. 12B) and/or the number of collaborators (for example, the number of collaborators 416 in Fig. 4B and the number of collaborators 1223 in Fig. 12B), while refusing to display identifiers of collaborators other than the owner (for example, the identifier of the collaborator 412 in Fig. 4A and the identifier of the collaborator 1222 in Fig. 12A) .

In some embodiments, the target information comprises a user identifier displayed in the first document (e.g., user identifier 1310 in Figs. 13A-13B); if the user does not have the second access permission, the refusing to display the associated content of the target information comprises:
refusing to display the user information corresponding to the user identifier in response to the triggering operation of the user on the user identifier.

In some embodiments, the method further comprises:
in response to a triggering operation of the user on a preset control in the interface of the first document, displaying a collaborator interface of the first document (e.g., the collaborator interface 330 in Figs. 4A-4B and the collaborator interface 1201 in Fig. 12A), and at least one of the following is displayed in the collaborator interface: an identifier of the owner of the first document (e.g., the identifiers of the owner 411, 417 in Figs. 4A-4B, the identifier of the owner 1221 in Fig. 12A), identifiers of the collaborator of the first document (e.g., identifier of the collaborator 412 in Fig. 4A and identifier of the collaborator 1222 in Fig. 12A), number of collaborators (e.g., number of collaborators 413 and 416 in Figs. 4A-4B and number of collaborators 1223 in Figs. 12A-12B), fold control (e.g., fold control in Figs. 4A-4B).

In some embodiments, if the user does not have the second access permission, the refusing to display the associated content of the target information comprises:
displaying the identifier of the owner of the first document (for example, the identifier of the owner 417 in Fig. 4B) and the number of collaborators (for example, number of collaborators 416 in Fig. 4B) in the collaborator interface, and hiding the identifier of the collaborator (for example, identifier of the collaborator 412 in Fig. 4A).

In some embodiments, if the user does not have the second access permission, the refusing to display the associated content of the target information comprises that:
the fold control displayed in the collaborator interface (e.g., the identifier of the owner 414 in Fig. 4B) is in a non-triggerable state.

In some embodiments, the user identifier displayed in the first document comprises at least one of the following: a user identifier in a comment area (such as comment area 601 in Fig. 6), a user identifier in text of the first document (such as text 602 in Figure 6 and text in Figures 13A-13B), a user identifier in a content component of the first document (such as content component 604 in Fig. 6), and a user identifier in a collaborator interface (such as collaborator interface in Figs. 4A-4B), a user identifier in a real-time collaboration interface area (such as collaboration area in Fig. 6).

It should be noted that the method of the embodiment of the present disclosure can be executed by a single device, such as a computer or a server. The method of this embodiment can also be applied to a distributed scene, which is completed by multiple devices in cooperation. In this distributed scene, one of the multiple devices can only perform one or more steps in the method of the embodiment of the present disclosure, and the multiple devices will interact with each other to complete the method.

It should be noted that some embodiments of the present disclosure have been described above. Other embodiments are within the scope of the appended claims. In some cases, the actions or steps recited in the claims can be performed in a different order than in the above embodiments and still achieve the desired results. In addition, the processes depicted in the drawings do not necessarily require the specific order shown or the sequential order to achieve the desired results. In some embodiments, multitasking and parallel processing are also possible or may be advantageous.

Based on the same inventive concept, the present disclosure also provides a document access apparatus corresponding to the method of any of the above embodiments.

Referring to Fig. 18, a document access apparatus comprises:
a display module configured for displaying document content of a first document in response to a user having a first access permission to the first document;
a second access permission determining module configured for determining whether the user has a second access permission in response to receiving an access request for target information displayed in the document content of the first document;
the display module is further configured for refusing to display associated content of the target information if the user does not have the second access permission; wherein the target information comprises at least one of the following: a link of the second document, a collaborator of the first document, and a user identifier displayed in the first document.

For the convenience of description, when describing the above devices, the functions are divided into various modules and described separately. Of course, the functions of each module can be realized in one or more softwares and/or hardwares when the present disclosure is implemented.

The apparatus of the above embodiment is configured to implement the corresponding document access method in any of the above embodiments, and has the advantageous effect of the corresponding method embodiment, so that the details are not repeated here.

Based on the same inventive concept, corresponding to the method of any of the above embodiments, the present disclosure also provides a non-transient computer-readable storage medium, which stores a computer instruction for causing a computer to execute the document access method of any of the above embodiments.

The computer-readable storage medium of this embodiment comprises a permanent and non-permanent, removable and non-removable medium, and information storage can be implemented by any method or technology. Information can be computer-readable instructions, data structures, modules of programs or other data. Examples of storage media for computers comprise, but not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, CD-ROM, digital versatile disc (DVD) or other optical storage, and magnetic cassette, magnetic tape magnetic disk storage or other magnetic storage devices or any other non-transmission media that can be used to store information that can be accessed by computing devices.

The computer instruction stored in the storage medium of the above embodiment is used to make the computer execute the document access method as described in any embodiment, and has the beneficial effect of the corresponding method embodiment, which will not be described in detail here.

It should be understood by those skilled in the art that the discussion of any of the above embodiments is only exemplary, and it is not intended to imply that the scope of the present disclosure (comprising the claims) is limited to these examples; under the idea of the present disclosure, the technical features in the above embodiments or different embodiments can also be combined, and the steps can be realized in any order, and there are many other variations in different aspects of the embodiments of the present disclosure as described above, which are not provided in the details for the sake of brevity.

In addition, in order to simplify the explanation and discussion, and not to obscure the embodiments of the present disclosure, commonly-known power/ground connections with integrated circuit (IC) chips and other components may or may not be shown in the provided drawings. In addition, devices may be shown in block diagram form in order to avoid making the embodiments of the present disclosure difficult to understand, and this also takes into account the fact that details about the implementation of these block diagram devices are highly dependent on the platform where the embodiments of the present disclosure will be implemented (i.e., these details should be completely within the understanding range of those skilled in the art). In the case where specific details (e.g., circuits) are set forth to describe exemplary embodiments of the present disclosure, it is obvious to those skilled in the art that the embodiments of the present disclosure can be practiced without these specific details or with changes in these specific details. Therefore, these descriptions should be regarded as illustrative rather than restrictive.

Although the present disclosure has been described in conjunction with specific embodiments thereof, many alternatives, modifications and variations of these embodiments will be obvious to those skilled in the art from the foregoing description. For example, other memory architectures (e.g., dynamic RAM(DRAM)) may use the discussed embodiments.

The embodiments of the present disclosure are intended to cover all such alternatives, modifications and variations that fall within the broad scope of the append claims. Therefore, any omission, modification, equivalent substitution, improvement, etc. made within the spirit and principles of the embodiments of the present disclosure should be comprised in the protection scope of the present disclosure.

## Claims

1. A document access method **characterized by** comprising:
in response to determining that a user has a first access permission to a first document, displaying document content of the first document;
in response to receiving an access request for target information displayed in the document content of the first document, determining whether the user has a second access permission; and
if the user does not have the second access permission, refusing to display associated content of the target information; wherein the target information comprises at least one of the following: a link of a second document, a collaborator of the first document, and a user identifier displayed in the first document.

2. The method according to claim 1, **characterized in that** the target information comprises the link of the second document; and if the user does not have the second access permission, the refusing to display the associated content of the target information comprising:
refusing to display a permission application portal corresponding to the link of the second document.

3. The method according to claim 2, **characterized in that** the permission application portal comprises a permission application control displayed in an associated area of the link of the second document in the first document or a permission application page corresponding to the link of the second document.

4. The method according to claim 1, **characterized in that** the target information comprises the link of the second document, and if the user does not have the second access permission, the method further comprises:
modifying a display state of the link of the second document; and/or setting the link of the second document to a non-triggerable state.

5. The method according to claim 1, **characterized in that** the target information comprises the collaborator of the first document; the if the user does not have the second access permission, refusing to display associated content of the target information comprises:
refusing to display an identifier of the collaborator of the first document; or, displaying an identifier of an owner of the first document and/or a number of collaborators, while refusing to display identifiers of collaborators other than the owner.

6. The method according to claim 1, **characterized in that** the target information comprises the user identifier displayed in the first document; the if the user does not have the second access permission, the refusing to display the associated content of the target information comprises:
refusing to display user information corresponding to the user identifier in response to a triggering operation of the user on the user identifier.

7. The method according to claim 1, **characterized in that** the method further comprises:
in response to a triggering operation of the user on a preset control in an interface of the first document, displaying a collaborator interface of the first document, and at least one of the following is displayed in the collaborator interface: an identifier of the owner of the first document, an identifier of the collaborator of the first document, a number of collaborators, and a fold control.

8. The method according to claim 7, **characterized in that** the if the user does not have the second access permission, refusing to display the associated content of the target information comprises:
displaying the identifier of the owner of the first document and the number of collaborators in the collaborator interface, and hiding the identifier of the collaborator.

9. The method according to claim 7, **characterized in that** the if the user does not have the second access permission, refusing to display the associated content of the target information comprises:
the fold control displayed in the collaborator interface is in a non-triggerable state.

10. The method according to claim 1, **characterized in that** the user identifier displayed in the first document comprises at least one of the following: a user identifier in a comment area, a user identifier in text of the first document, a user identifier in a content component of the first document, and a user identifier in a collaborator interface, and a user identifier in a real-time collaboration interface area.

11. A document access apparatus **characterized by** comprising:
a display module configured for displaying document content of a first document in response to a user having a first access permission to the first document;
a second access permission determining module configured for determining whether the user has a second access permission in response to receiving an access request for target information displayed in the document content of the first document;
the display module is further configured for refusing to display associated content of the target information if the user does not have the second access permission; wherein the target information comprises at least one of the following: a link of the second document, a collaborator of the first document, and a user identifier displayed in the first document.

12. An electronic device comprising a memory, a processor, and a computer program stored in the memory and executable on the processor, and the processor, when executing the program, implements the method according to any one of claims 1 to 10.

13. A non-transient computer-readable storage medium which stores a computer instruction for causing a computer to implement the method according to any one of claims 1 to 10.

14. A computer program product comprising a computer program instruction which, when run on a computer, causes the computer to implement the method of any one of claims 1 to 10.
